# EUROPÄISCHE PATENTSCHRIFT

(11) **EP 0 894 821 B1**
(45) Veröffentlichungstag und Bekanntmachung des Hinweises auf die Patenterteilung: **11.10.2000**
(21) Anmeldenummer: 98112245.0
(22) Anmeldetag: 02.07.1998
(51) Int. Cl.: C08K 5/00, C08L 57/00, C04B 40/00

(54) **Vernetzbare, in Wasser redispergierbare Pulverzusammensetzung**
Crosslinkable, redispersible powder composition
Composition en poudre redispersable et durcissable

(30) Priorität: 31.07.1997 DE 19733156
(43) Veröffentlichungstag der Anmeldung: 03.02.1999
(73) Patentinhaber: Wacker-Chemie GmbH, 81737 München (DE)
(72) Erfinder: Eck, Herbert, Dr., 83646 Bad Tölz (DE); Mayer, Theo, Dr., 84533 Haiming (DE); Weitzel, Hans-Peter, Dr., 84571 Reischach (DE)
(74) Vertreter: Schuderer, Michael, Dr.

(56) Entgegenhaltungen:
- WO-A-97/15616
- DE-A- 19 707 746
- HALPERN, MARC: "Phase-transfer catalysis" ULLMANN'S ENCYCLOPEDIA OF INDUSTRIAL CHEMISTRY, Bd. a19, 1991, Seiten 293-298, XP002083233 weinheim

## Beschreibung

Die Erfindung betrifft eine vernetzbare, in Wasser redispergierbare Pulverzusammensetzung sowie deren Verwendung.

In der EP-A 601518 werden vernetzbare, in Wasser redispergierbare Dispersionspulver auf der Basis von Carboxylgruppen-haltigen Acrylatmischpolymerisaten beschrieben, welche in Gegenwart von Polyvinylalkohol getrocknet werden und zur Vernetzung polyvalente Metallionen enthalten können. Ähnliche vernetzbare Dispersionspulver sind auch aus der US-A 3409578 bekannt, in der Pulverzusammensetzungen aus Carboxylgruppen-haltigen Polymeren und/oder carboxylgruppenhaltigen Schutzkolloiden in Gegenwart von polyvalenten Metallionen vernetzt werden. Nachteilig ist, daß derartige Zusammensetzungen mit polyvalenten Metallsalzen häufig in Gegenwart von Wasser Säure freisetzen und zur vorzeitigen Vernetzung, speziell bei Kontakt mit Feuchtigkeit, neigen.

Zur Vermeidung der vorzeitigen Vernetzung wird in der EP-A 702059 (US-A 5608011) vorgeschlagen, vernetzbare Dispersionspulver von N-Methylol-haltigen Copolymerisaten mit einer Katalysatorkombination aus wasserlöslichen oder in Wasser dispergierbaren Peroxosäuresalzen bzw. Reduktionsmitteln einzusetzen. Die EP-B 687317 beschreibt in Wasser redispergierbare, vernetzbare Pulver auf der Basis von N-Methylol-funktionellen Copolymerisaten, welche in der Wärme vernetzen. Nachteilig bei dem zuletztgenannten Pulver ist die Tatsache, daß ausschließlich durch Wärme vernetzbare Pulver in vielen Anwendungen nicht eingesetzt werden können.

Aus der EP-A 723975 sind vernetzbare Dispersionspulver auf der Basis von Epoxidgruppen-haltigen Copolymerisaten bekannt. Zur Vernetzung werden externe Vernetzer beispielsweise Polyamine, Polycarbonsäuren, hydroxyfunktionalisierte Polymere sowie polyvalente Metallsalze zugegeben. Problematisch beim Einsatz von Polyaminen oder polyvalenten Metallsalzen ist die geringe Lagerstabilität. Der Einsatz von Polycarbonsäure bzw. hydroxyfunktionalisierten Polymeren beeinträchtigt die Lagerstabilität nicht; allerdings muß zur Reaktion mit den Epoxygruppen bei erhöhter Temperatur gearbeitet werden, da ansonsten die in der Anmeldung angegebene Stabilisierung der Dispersionspulver mit üblichen Schutzkolloiden nicht möglich wäre.

Aus der EP-A 721004 sind vernetzbare, redispergierbare Pulvermischungen bekannt, welche filmbildende Polymerteilchen mit mindestens einer funktionellen, vernetzbaren Gruppe enthalten. Die vernetzbare Gruppe kann auch über die Schutzkolloide eingeführt werden. Zur Vernetzung wird auch in dieser Schrift die Zugabe eines externen Vernetzers empfohlen, der mindestens eine reaktive Komponente umfaßt, welche mit den funktionellen Gruppen nichtionische Bindungen eingeht, nachdem die Mischung in Wasser redispergiert wird.

Der Erfindung lag die Aufgabe zugrunde, eine vernetzbare, in Wasser redispergierbare Polymerpulverzusammensetzung zur Verfügung zu stellen, welche sich durch gute Lagerstabilität auszeichnet und welche die Möglichkeit bietet die Vernetzungsgeschwindigkeit dem jeweiligen Anwendungsgebiet anzupassen. Eine weitere Aufgabe bestand darin vernetzbare Dispersionspulver zugänglich zu machen, welche ohne Zugabe von externen Vernetzern zur Vernetzung gebracht werden können.

Überraschenderweise ist dies durch die Verwendung von Phasentransfer-Katalysatoren im Gemisch mit vernetzbaren Polymeren gelungen, wobei zur Vernetzung auch die Funktionalitäten der in redispergierbaren Pulvern präsenten Schutzkolloide ausgenutzt werden können.

Gegenstand der Erfindung ist eine vernetzbare, in Wasser redispergierbare Pulverzusammensetzung enthaltend
a) 30 bis 95 Gewichtsteile eines in Wasser unlöslichen, filmbildenden Polymerisats aus einem oder mehreren radikalisch polymerisierbaren, ethylenisch ungesättigten Monomeren,
b) 5 bis 70 Gewichtsteile eines wasserlöslichen Polymerisats, wobei zumindest einer der Polymeranteile a) und b) ein oder mehrere Comonomereinheiten mit reaktiven Gruppen enthält, die miteinander oder mit Vernetzern eine chemische, nichtionische Bindung eingehen können, und sich die Gewichtsteile von a) und b) auf 100 Gewichtsteile aufaddieren, und
c) 0.01 bis 5 Gew%, bezogen auf das Gesamtgewicht von a) und
b), mindestens eines Phasentransfer-Katalysators.

Geeignete in Wasser unlösliche, filmbildende Polymerisate enthalten eine oder mehrere Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen der Fumarsäure- und Maleinsäuremonooder -diester von unverzweigten oder verzweigten Alkoholen mit 1 bis 12 C-Atomen, der Diene wie Butadien oder Isopren, der Olefine wie Ethen oder Propen, der Vinylaromaten wie Styrol, Methylstyrol, Vinyltoluol, der Vinylhalogenide wie Vinylchlorid. Unter wasserunlöslich ist dabei zu verstehen, daß die Löslichkeit der Polymerisate unter Normalbedingungen weniger als 1 g pro Liter Wasser beträgt. Für die Filmbildung wird im allgemeinen die Polymerzusammensetzung so gewählt, daß bei der Verarbeitungstemperatur Filmbildung erfolgt, vorzugsweise so, daß eine Glasübergangstemperatur Tg von -30°C bis +80°C resultiert.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9^{R} oder VeoVa10^{R} (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl- Gruppe.

Für Vernetzungsreaktionen geeignete Monomereinheiten im Polymer a) und/oder b) sind solche, welche vernetzbare Gruppen enthalten, die unter der Einwirkung von Phasentransferkatalysatoren beschleunigt vernetzen. Dies sind im allgemeinen funktionelle Gruppen, die über nucleophile Substitutionsreaktionen, Kondensationsreaktionen oder Additionsreaktionen untereinander oder mit anderen funktionellen Gruppen vernetzen. Daraus lassen sich die für die Vernetzungsreaktionen geeigneten reaktiven Gruppen ableiten, die im wasserunlöslichen Polymer a) und/oder im wasserlöslichen Schutzkolloid b) enthalten sein können.

Im wasserunlöslichen Polymer a) werden die vernetzbaren Gruppen bevorzugt durch Copolymerisation von, die gewünschten funktionellen Gruppen enthaltenden, Monomeren eingebaut. Entsprechend substituierte Comonomereinheiten können aber auch nachträglich funktionalisiert werden.

Für die Vernetzung über Kondensationsreaktionen geeignet sind Alkoxysilan-funktionelle Monomereinheiten wie Acryloxypropyltri(alkoxy)- und Methacryloxypropyltri (alkoxy)-Silane, Vinyltrialkoxysilane und Vinylmethyldialkoxysilane, wobei als Alkoxygruppen beispielsweise Methoxy-, Ethoxy-, Methoxyethylen-, Ethoxyethylen-, Methoxypropylenglykolether- und Ethoxypropylenglykolether-Reste enthalten sein können. Bevorzugt werden Vinyltriethoxysilan und gamma-Methacryloxypropyltriethoxysilan.

Weitere Beispiele für durch Kondensationsreaktion vernetzbare Comonomere sind Acrylamidoglykolsäure (AGA), Methacrylamidoglykolsäuremethylester (MAGME), N-Methylolacrylamid (NMAA), N-Methylolmethacrylamid, N-Methylolallylcarbamat, Alkylether von N-Methylolacrylamid oder N-Methylolmethacrylamid wie deren Isobutoxyether oder n-Butoxyether.

Durch Additionsreaktionen vernetzbar sind Epoxidgruppen-haltige Comonomere wie Glycidylacrylat, Glycidylmethacrylat, Glycidylvinylether und Glycidylallylether, und Isocyanat-Monomere wie meta- und para-Isopropenyl-alpha,alpha-dimethyl-benzylisocyanat (TMI), 2-Methyl-2-isocyanatopropylmethacrylat, wobei die Isocyanatgruppen der genannten Monomere gegebenenfalls auch blockiert sein können, beispielsweise mit Phenol, Salicylsäureester, Ketoxim, Caprolactam, Malonsäuredialkylester, Acetessigsäurealkylester, 2,2-Dimethyl-1,3-dioxan-4,6-dion. Beispiele für Anhydridcomonomere sind Allylbernsteinsäureanhydrid und Maleinsäureanhydrid.

Weitere Beispiele für vernetzbare Comonomere sind Hydroxygruppen-haltige Comonomere wie Hydroxyalkylacrylate und -methacrylate, welche gegebenenfalls acetoacetyliert werden können, wie Hydroxyethyl (meth)acrylat, Hydroxypropyl (meth)acrylat und Hydroxybutyl(meth)acrylat. Geeignet sind auch Carbonsäureoder Sulfonsäure-funktionelle Comonomere wie Vinylsulfonsäure, Acryl-, Methacryl-, Malein-, Fumar-, Croton- und Itaconsäure, die Halbester der Malein- und Fumarsäure, Monovinylbernsteinsäureester, Methylenmalonsäure.

Beispiele für vernetzbare, Carbonylgruppen enthaltende Monomereinheiten sind Vinyl- oder Allylacetoacetat, Vinyl- oder Allylbisacetoacetat, Acrolein. Beispiele für vernetzbare Monomereinheiten mit Amingruppen sind Allylamin, (Meth)acrylsäure-2-aminoethylester, Hydrazidgruppen enthaltende Verbindungen wie Acrylsäurehydrazid und Crotonsäurehydrazid. Geeignet sind auch reaktive Halogenatome enthaltende Verbindungen wie Chloressigsäure-Vinylester oder -Allyester, Chlormethylstyrol, Allylchlorid oder Allylbromid, Vinylidenchlorid.

Die vernetzbaren Monomereinheiten sind im allgemeinen in einer Menge von 0.1 bis 10 Gew%, vorzugsweise 0.5 bis 5 Gew%, jeweils bezogen auf das Gesamtgewicht des Polymerisats a) enthalten.

Als vernetzbare Monomereinheiten bevorzugt werden Glycidyl(meth)acrylat, meta- und para-Isopropenyl-alpha,alpha-dimethylbenzylisocyanat (TMI), Allylacetoacetat, gegebenenfalls acetoacetyliertes Hydroxyethyl(meth)acrylat bzw. Hydroxypropyl(meth)acrylat, Acrylamidoglykolsäure (AGA), Methacrylamidoglykolsäuremethylester (MAGME), N-Methylolacrylamid (NMAA), Acryl-, Methacryl-, Malein-, Fumar-, Croton- und Itaconsäure.

Als Hilfsmonomere geeignet sind auch mehrfach ethylenisch ungesättigte Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat.

Als Polymere a), welche die genannten vernetzbaren Comonomereinheiten in den angegebenen Mengen enthalten, werden bevorzugt:
Aus der Gruppe der Vinylester-Polymerisate
Vinylacetat-Polymerisate;
Vinylester-Ethylen-Copolymere wie Vinylacetat-Ethylen-Copolymere mit einem Ethylengehalt von 1 bis 60 Gew%;
Vinylester-Ethylen-Vinylchlorid-Copolymere mit einem Ethylengehalt von 1 bis 40 Gew% und einem Vinylchlorid-Gehalt von 20 bis 90 Gew%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester, enthalten sind;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9^{R}, VeoVa10^{R}), welche gegebenenfalls noch 1 bis 40 Gew% Ethylen enthalten;
Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;
Vinylester-Acrylsäureester-Copolymerisate mit 30 bis 75 Gew% Vinylacetat, 1 bis 30 Gew% Vinyllaurat oder Vinylester einer alpha-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;
Vinylester-Copolymerisate mit Estern der Maleinsäure oder Fumarsäure wie Diisopropyl-, Di-n-butyl, Di-t-butyl-, Di-ethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.
Aus der Gruppe der (Meth)acrylsäurepolymerisate Polymerisate von n-Butylacrylat oder 2-Ethylhexylacrylat; Copolymerisate von Methylmethacrylat mit n-Butylacrylat und/oder 2-Ethylhexylacrylat.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylatcopolymere.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 1 bis 70 Gew%.

Als wasserlösliche Polymerisate b) werden wasserlösliche Schutzkolloide eingesetzt, welche gegebenenfalls mit Hydroxylgruppen, Mercaptogruppen, Carboxylgruppen, Amingruppen oder Carbonylgruppen funktionalisiert sind. Unter wasserlöslich ist dabei zu verstehen, daß die Löslichkeit bei Normalbedingungen mehr als 10 g pro Liter Wasser beträgt. Geeignete Schutzkolloide sind im Handel erhältlich. Soweit die funktionellen Gruppen nicht ohnehin schon in den Schutzkolloiden enthalten sind, können letztere auch nachträglich funktionalisiert werden. Mit Mercaptogruppen, Carboxylgruppen, Amingruppen oder Carbonylgruppen funktionalisierte Polyvinylalkohole sind auch durch Copolymerisation entsprechend funktionalisierter Comonomere mit Vinylacetat und anschließender Hydrolyse in dem Fachmann bekannter Weise zugänglich.

Beispiele für geeignete Schutzkolloide sind Polyvinylalkohole mit einem Gehalt von 75 bis 100 Mol%, bevorzugt 78 bis 95 Mol%, Vinylalkoholeinheiten und einem Molekulargewicht von vorzugsweise 5000 bis 200000; Polyvinylpyrrolidone mit einem K-Wert von 10 bis 120; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein, Sojaprotein, Gelatine; Ligninsulfonate; synthetische Polymere wie Poly(meth)acrylsäure, Poly-(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Als Polymere b) bevorzugt werden die genannten Polyvinylalkohole, Stärken, Cellulosen, Casein, Melaminformaldehydsulfonate, Naphthalinformaldehydsulfonate, sowie aus der Gruppe der funktionalisierten Schutzkolloide, die mit Carboxylgruppen, Acetoacetylgruppen oder Aminogruppen funktionalisierten Polyvinylalkohole, und die Carboxymethyl-substituierten Stärken und Cellulosen.

Die genannten wasserlöslichen Polymere b) können während der Polymerisation des Polymeren a) als Schutzkolloide zugegeben werden, oder vor der Verdüsung der wässrigen Dispersion des Polymers a) als Verdüsungshilfe zugegeben werden, oder teilweise während der Polymerisation und der Rest vor der Verdüsung zugegeben werden.

Typische Beispiele für Phasentransfer-Katalysatoren sind in Ullmann, Encyclopedia of Industrial Chemistry, Vol. 19A, p. 294-295 (1991) beschrieben. Geeignet sind beispielsweise: Quarternäre Ammoniumsalze wie Tetrabutylammonium-, Benzyltrimethylammonium-, Benzyltriethylammonium-, Methyltributylammonium-, Methyltrioctylammonium-Salze. Quarternäre Phosphoniumsalze wie Tetrabutylphosphonium-Salze. Quarternäre Pyridiniumsalze wie N-(2-Ethylhexyl)-4-(N',N'-dimethylamino)-Pyridinium-Salze. Im allgemeinen liegen diese Salze als Halogenide, beispielsweise als Chlorid oder Bromid, oder als Sulfat oder Acetat vor. Kronenether wie 18-Krone-6, Dibenzo-18-krone-Kryptofix (2.2.2), Tris-[2-(2-methoxyethoxy)ethyl]-Amin. Polyether wie Polyethylenglykole (PEG-1000, PEG-2000) oder Tris-(Dioxa-3,6-heptyl)-Amin (TDA-1), ferner Polyethylenglykol-dialkyl-Ether, Polyethylenglykol-aryl-aralkyl-Ether wie Triton^{R}CF10, Polyethylenglykol-alkyl-aryl-Ether und zur Komplexbildung geeignete tertiäre Di- oder Oligoamine wie N,N,N',N'-Tetramethylethylendiamin.

Die Herstellung der wasserunlöslichen Polymerisate a) erfolgt vorzugsweise mit dem Emulsionspolymerisationsverfahren. Diese wird im offenen Reaktionsgefäß oder in Druckgefäßen, in einem Temperaturbereich von 0°C bis 100°C durchgeführt und mit den für die Emulsionspolymerisation üblicherweise eingesetzten Methoden eingeleitet. Die Initiierung erfolgt mittels der gebräuchlichen, zumindest teilweise wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren eingesetzt werden. Geeignete Emulgatoren sind sowohl anionische, kationische als auch nichtionische Emulgatoren. Vorzugsweise werden die Emulgatoren in einer Menge bis zu 3 Gew%, bezogen auf das Gesamtgewicht der Monomeren, eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Herstellung wird vorzugsweise in Gegenwart der obengenannten Schutzkolloide durchgeführt. Der für die Polymerisation gewünschte pH-Bereich, der im allgemeinen zwischen 2.5 und 10, vorzugsweise 3 und 8, liegt, kann in bekannter Weise durch Säuren, Basen und übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Der Festgehalt der so erhältlichen Dispersion beträgt 20 bis 70 %. Die mittlere Teilchengröße beträgt 0.1 bis 10 µm, vorzugsweise 0.2 bis 5 µm.

Die Trocknung der Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad gewählt.

Zur Sprühtrocknung wird die Dispersion des Polymerisats a) mit einem Festgehalt von vorzugsweise 20 % bis 60 % gemeinsam mit Schutzkolloiden als Verdüsungshilfe versprüht und getrocknet. Als Schutzkolloide können dabei die obengenannten wasserlöslichen Polymere b) eingesetzt werden, wobei die Schutzkolloide der wässrigen Dispersion vor dem Sprühtrocknen, in Form einer wässrigen Lösung, zugegeben werden können. Bevorzugt werden bei diesem Verfahrensschritt 5 bis 20 Gew% wasserlösliches Polymer b), bezogen auf Polymer a), zugesetzt.

Im allgemeinen werden die Phasentransfer-Katalysatoren c) nach dem Trockenvorgang zugemischt, vorzugsweise in fester Form. Will man flüssige Katalysatoren verwenden, so können diese z.B. an Feststoffoberflächen adsorbiert eingesetzt werden oder auf das trockene Pulver aufgesprüht werden.

Aufgrund des Gehalts an Phasentransferkatalysatoren kann auch die Vernetzung des reaktive Gruppen enthaltenden Polymers a) und/oder des funktionalisierten Schutzkolloids b) mit externen Vernetzern beschleunigt werden. Als weiterer Bestandteil der Pulverzusammensetzung kommen demnach auch konventionelle Vernetzer in Betracht.

Geeignete Vernetzer sind Di-, Oligo- und Polyamine wie Diaminobutan, Hexamethylendiamin, Polyalkylenamine wie Triethylentetramin; Di-, Oligo- und Polycarbonsäuren wie Adipinsäure, Polyacrylsäure; Verbindungen mit zwei oder mehr Alkoholgruppen wie Ethylenglykol, Butandiol, Pentaerythriol, Polytetramethylenglykol, Bisphenol A, Polyalkylenoxidaddukte von Ethylenglykol; Verbindungen mit zwei und mehr Silanol- oder Alkoxysilan-Gruppen wie Methyltriethoxysilan in monomerer oder kondensierter Form; Di-, Oligo- oder Polyisocyanate in freier oder blockierter Form wie Toluoldiisocyanat, Isophorondiisccyanat, Dimethyl-meta-isopropenylbenzylisocyanat; polyvalente Metallionen wie Aluminium-, Eisen(III)- oder Zink-Chlorid. Geeignet sind auch Verbindungen mit zwei oder mehr Gruppen aus der Reihe Epoxid-, Aldehyd-, Keto-, reaktive CH-Gruppe wie Glutaraldehyd, Terephthaldialdehyd; Bisacetoacetate des Ethylen-, Propylen-, Butylen-, Hexadienglykols; Organohalogenverbindungen wie Trichlortriazin oder Dichloressigsäureester von Alkylenglykolen; Verbindungen mit mehreren Aziridin-, Carbodiimidoder Oxazolin-Gruppen, sowie Aminformaldehyde. Die Vernetzer können in einer Menge von 1 bis 10 Mol-Äquivalenten pro vernetzbarer Gruppe in den Polymeren a) oder b) eingesetzt werden.

Gegebenenfalls kann die Pulverzusammensetzung noch mit weiteren Zusatzstoffen modifiziert werden. Beispiele hierfür sind Antiblockmittel, Farbstoffe, Pigmente, Weichmacher, Verfilmungshilfsmittel, Antischaummittel, Katalysatoren, Rheologiehilfsmittel, Verdickungsmittel, Haftmittel umd Emulgatoren, wobei diese, falls sie im Originalzustand flüssig sind, vor dem Zumischen in einen pulverförmigen Zustand übergeführt werden müssen.

Die Dispersionspulverzusammensetzung kann in den dafür typischen Anwendungsbereichen eingesetzt werden. Beispielsweise in bauchemischen Produkten in Verbindung mit anorganischen, hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien und Papier. Vorzugsweise wird die Dispersionspulverzusammensetzung als Bindemittel in Anwendungsgebieten eingesetzt, in denen neben einer guten Haftung auch eine reduzierte Wasseraufnahme und/oder gute Lösungsmittelbeständigkeit erwünscht ist.

Die erfindungsgemäßen Redispersionspulver sind Produkte, die in Wasser gut redispergieren und bei der Anwendung in Pulverform oder als wässrige Dispersion mechanisch feste, vernetzte und nicht mehr redispergierbare Filme bilden. Die Vernetzung erfolgt unter milderen Bedingungen und vollständiger als ohne Katalysatorzusatz. Überraschenderweise wurde die Lagerungsstabilität durch Zusatz von Phasentransfer-Katalysatoren nicht drastisch herabgesetzt, sondern blieb stabil. Überraschend war auch, daß die Blockstabilität durch die oft hygroskopischen Katalysatoren nicht meßbar beeinflußt wurde. Der große Vorteil der erfindungsgemäßen Zusammensetzung liegt darin, daß ein Ein-Komponenten-System als vernetzbare Dispersionspulver-Zusammensetzung zur Verfügung gestellt wird, welchem im Gegensatz zu den 2-Komponenten-Systemen des Stands der Technik, keine externen Vernetzer zugesetzt werden müssen. Bei der Ausführungsform als 2-Komponenten-System mit zusätzlichem Vernetzer kann durch die Verwendung des Phasentransferkatalysators die Vernetzungsreaktion beschleunigt werden, mit der Folge, daß thermische Vernetzungen bei deutlich tieferem Temperaturniveau ablaufen.

Die nachfolgenden Beispiele dienen der weiteren Erläuterung der Erfindung:

### Beispiel 1:

In einem 16 l Rührautoklaven wurden 3420 g Wasser, 352 g Polyvinylalkohol mit einer Höppler-Viskosität von 4 mPas (4 %-ige Lösung in Wasser bei 20°C) und einer Verseifungszahl von 140, 50 g Dodecylbenzolsulfonat (15 %-ig in Wasser), 510 g
Vinylacetat und 200 g Ethylen vorgelegt und die Mischung auf 50°C erwärmt. Dann wurden die Katalysatorlösungen, eine 6 %-ige wässrige Lösung von Natriumpersulfat und eine 3 %-ige wässrige Lösung von Natriumformaldehydsulfoxylat, eingefahren. Nach Anspringen der Polymerisation wurde die Monomerdosierung aus 2800 g Vinylacetat und 120 g Glycidylmethacrylat eingefahren. Während der Polymerisation wurden weitere 800 g Ethylen nachgedrückt. Nach Ablauf der Dosierzeit von ca. 5 h wurde 2 h nachpolymerisiert.
Der Festgehalt der Dispersion betrug 51 %. Das Polymerisat hatte einen K-Wert von 74.5, eine Tg von 4°C, und eine MFT von 0°C.
Vor der Verdüsung wurden 8.1 Gew%, bezogen auf Polymer, Polyvinylalkohol mit einer Höppler-Viskosität von 13 mPas (4 %-ige Lösung in Wasser bei 20°C) und einer Verseifungszahl von 140, sowie 0.8 Gew%, bezogen auf Polymer, Polyvinylalkohol mit einer Höppler-Viskosität von 5 mPas (4 %-ige Lösung in Wasser bei 20°C) und einer Verseifungszahl von 140 in Form von wässrigen Lösungen zugegeben. Der Festgehalt der zu verdüsenden Mischung betrug 35 Gew%. Die Trocknung erfolgte in einem Nubilosa-Sprühtrockner bei einer Austrittstemperatur von 82°C und einem Preßluftdruck vor der 2-Stoffdüse von 4 bar.

### Beispiel 2:

In einem 16 l Rührautoklaven wurden 2000 g Wasser und 487 g Polyvinylalkohol mit einer Höppler-Viskosität von 4 mPas (4 %-ige Lösung in Wasser bei 20°C) und einer Verseifungszahl von 140 vorgelegt, auf 50 °C erwärmt und Ethylen bis 60 bar aufgedrückt. Dieser Druck wurde während der gesamten Dosierzeit der Monomere beibehalten. Die Katalysatordosierungen, eine 2.6 %-ige wässrige Lösung von t-Butylhydroperoxid und eine 4.5 %-ige wässrige Natriumformaldehydsulfoxylatlösung, wurden gleichzeitig mit der Monomerdosierung eingefahren. Die Monomerlösung bestand aus 4563 g Vinylchlorid, 1950 g Vinylacetat sowie 200 g Glycidylacrylat. Nach Reaktionsbeginn wurde innerhalb von 6 bis 7 Stunden eine Lösung von 667 g Polyvinylalkohol mit einer Höppler-Viskosität von 4 mPas (4 %-ige Lösung in Wasser bei 20°C) und einer Verseifungszahl von 140 in 3937 g Wasser dosiert. Die Dosierzeit der Monomermischung betrug 8 h. Nach Abschluß der Dosierung wurde 2 Stunden nachpolymerisiert. Der Festgehalt betrug 50.2 %. Die Tg des Polymers betrug 13.5 °C.
Vor der Verdüsung wurden 7.0 Gew%, bezogen auf Polymer, eines 1 Gew% Crotonsäureeinheiten enthaltenden Polyvinylalkohols mit der Verseifungszahl 80 und einer Höpplerviskosität von 7 in Form einer 18 %-igen wässrigen Lösung zugegeben. Die Trocknung erfolgte wie im Beispiel 1 in einem Nubilosa-Sprühtrockner.

### Beispiel 3:

Die Polymerisation und Verdüsung erfolgte analog Beispiel 1 mit dem Unterschied, daß anstelle von 120 g Glycidylmethacrylat 120 g Acetessigsäureallylester eingesetzt wurden. Die dabei erhaltene Dispersion hatte einen Festgehalt von 50.3 %. Das Polymerisat hatte einen K-Wert von 82.9, eine Tg von 1°C und eine MFT von 0°C.
Vor der Verdüsung wurden 8.5 Gew%, bezogen auf Polymer, eines 1 Gew% Crotonsäureeinheiten enthaltenden Polyvinylalkohols mit der Verseifungszahl 80 und einer Höpplerviskosität von 7 in Form einer 18 %-igen wässrigen Lösung zugegeben. Die Trocknung erfolgte analog Beispiel 1.

### Beispiel 4:

In einem 2.5 1 Rührgefäß wurden eine Lösung von 77.5 g Polyvinylalkohol mit einer Höppler-Viskosität von 4 mPas (4 %-ige Lösung in Wasser bei 20°C) und einer Verseifungszahl von 140 in 706 g Wasser vorgelegt und darin 120.6 g einer 1:1-Mischung (w/w) von Styrol und Butylacrylat voremulgiert. Nach dem Erwärmen der Emulsion auf 50°C wurden gleichzeitig die Dosierungen einer 4.9 %-igen wässrigen t-Butylhydroperoxidlösung, einer 8.3 %-igen wässrigen Ascorbinsäurelösung und 406 g einer 1:1-Mischung (w/w) von Styrol und Butylacrylat, in der 23.5 g Isopropenyldimethylbenzylisocyanat gelöst waren, eingefahren. Nach 2 h war die Monomerdosierung beendet. Es wurde mit einer 10 %igen H₂O₂-Lösung nachpolymerisiert. Die Dispersion hatte einen Festgehalt von 50.4 % und einen pH von 5.0.
Die Zugabe von Polyvinylalkohol und die Verdüsung erfolgte analog Beispiel 1.

### Beispiel 5:

In einem 16 l Rührautoklaven wurden 3700 g einer 18 %-igen Lösung eines 1 Gew% Crotonsäureeinheiten enthaltenden Polyvinylalkohols mit der Verseifungszahl 80 und einer Höppler-viskosität von 7, 2270 g Wasser und 769 g Vinylacetat vorgelegt, 1350 g Ethylen aufgedrückt und die Mischung auf 50°C erwärmt. Dabei stieg der Druck auf 55 bar. Dann wurden die Katalysatorlösungen, eine 5.5 %-ige wässrige Natriumpersulfatlösung und eine 3.9 %-ige Brüggolitlösung eingefahren. Nach Reaktionsbeginn wurde mit der Vinylacetatdosierung (5190 g) begonnen. Die Dosierdauer betrug 4 h. Nach Abschluß der Dosierung wurde 1 h nachpolymerisiert. Die Dispersion hatte einen Festgehalt von 51.3 %. Das Polymerisat hatte einen K-Wert von 146, und eine MFT < 0°C.
Vor der Verdüsung wurden 5 Gew%, bezogen auf Polymerisat, einer niederviskosen Gelatine in Form einer wässrigen Lösung zugegeben. Der Festgehalt der zu verdüsenden Mischung betrug 37 %. Die Verdüsung erfolgte analog Beispiel 1.

### Beispiel 6:

In einen Druckautoklaven mit 17 l Volumen wurden 2100 g Wasser und 138 g Polyvinylalkohol mit einer Höppler-Viskosität von 4 mPas (4 %-ige Lösung in Wasser bei 20°C) und einer Verseifungszahl von 140 vorgelegt. Der Autoklav wurde auf 60°C aufgeheizt und Ethylen bis 75 bar aufgedrückt. Dieser Druck wurde während der gesamten Dosierzeit der Monomeren beibehalten. Die Katalysatordosierungen, eine 5 %-ige wässrige Lösung von t-Butylhydroperoxid und eine 5 %-ige wässrige Natriumformaldehydsulfoxylatlösung, wurden gleichzeitig mit der Monomerdosierung eingefahren. Die Monomerdosierung bestand aus 5874 g Vinylchlorid und 1031 g Vinylacetat. Nach Reaktionsbeginn wurde innerhalb von 7 Stunden eine Lösung von 358 g Polyvinylalkohol mit einer Höppler-Viskosität von 4 mPas (4 %-ige Lösung in Wasser bei 20°C) und einer Verseifungszahl von 140 in 5417 g Wasser und eine Lösung von 304 g eines 1 Gew% Crotonsäureeinheiten enthaltenden Polyvinylalkohols in 3861 g Wasser zudosiert. Gleichzeitig wurde eine Voremulsion aus 138 g Glycidylmethacrylat, 358 g Polyvinylalkohol mit einer Höppler-Viskosität von 4 mPas (4 %-ige Lösung in Wasser bei 20°C) und einer Verseifungszahl von 140 und 69 g Wasser zudosiert. Nach Abschluß der Dosierungen wurde 2 Stunden nachpolymerisiert.
Die Trocknung erfolgte wie im Beispiel 1 in einem Nubilosa-Sprühtrockner.

Die Pulver aus den Beispielen 1 bis 6 wurden mit der in der Tabelle angegebenen Art und Menge an Phasentransferkatalysators gemischt und zu einer 50 %-igen wässrigen Dispersion redispergiert. Damit wurde ein 0.2 mm dicker Film hergestellt und dieser 12 h bei Raumtemperatur bzw. 15 Minuten bei 110°C getrocknet.
Als Vergleich dienten entsprechend hergestellte Filme aus redispergierten Pulvern ohne Zusatz von Phasentransferkatalysator.

Als Phasentransferkatalysatoren wurden eingesetzt:
Tetrabutylammoniumhydrochlorid (TBAHCl),
Benzyltrimethylammoniumhydrogensulfat (BTMAHS),
Kronenether 18-Krone-6, und
Kronenether Kryptofix-2.2.2.

Redispergierbarkeit der Filme:
Zur Bestimmung des Vernetzungsgrades der Filme wurde auf die jeweiligen mit der Redispersion hergestellten Filme ein Wassertropfen aufgetragen und nach 60 Sekunden Einwirkzeit durch Reiben mit der Fingerkuppe die Redispergierbarkeit der Filme geprüft.

### Auswertung der Film-Redispergierbarkeit:

Note 1: sehr gut redispergierbar
   Film läßt sich durch ganz leichtes Reiben sofort redispergieren oder redispergiert bereits selbständig.
Note 2: gut redispergierbar
   Film läßt sich durch Reiben gut redispergieren; Filmstücke möglich, aber wenig und sehr leicht zwischen Fingern redispergierbar.
Note 3: etwas redispergierbar
   Film läßt sich nur durch kräftiges Reiben redispergieren; Unterlage wird nur langsam unter Filmzerstörung (Filmstücke) erreicht; Filmstücke nicht redispergierbar.
Note 4: nicht redispergierbar
   Film läßt sich auch durch längeres kräftiges Reiben nicht redispergieren; Film zerfällt ohne zu redispergieren in Filmstücke oder löst sich vom Untergrund.

Die Ergebnisse der Testung sind in der nachfolgenden Tabelle zusammengefaßt:

**Tabelle 1:**

| Vers.Nr | Pulvertype | Katalysator Art % ¹⁾ | | Redispergierbarkeit | |
|---|---|---|---|---|---|
| | | | | Film bei 23°C getrocknet | Film bei110°C getrocknet |
| 1 | Beispiel 1 | - | - | 1 | 1 - 2 |
| 2 | Beispiel 2 | TBAHCl | 0.2 | 4 | 4 |
| 3 | Beispiel 2 | | - | 1 | 1 - 2 |
| 4 | Beispiel 2 | BTMAHS | 0.2 | 4 | 4 |
| 5 | Beispiel 3 | | - | 1 - 2 | 1 - 2 |
| 6 | Beispiel 3 | TBAHCl | 0.3 | 3 | 3 - 4 |
| 7 | Beispiel 4 | | - | 1 | 1 - 2 |
| 8 | Beispiel 4 | TBAHCl | 0.2 | 4 | 1 - 2 |
| 9 | Beispiel 5 | | - | 1 - 2 | 2 |
| 10 | Beispiel 5 | TBAHCl | 0.3 | 3 - 4 | 4 |
| 11 | Beispiel 6 | | - | 1 | 1 - 2 2 |
| 12 | Beispiel 6 | TBAHCl | 0.5 | 3 - 4 | 4 |
| 13 | Beispiel 1 | 18-Krone-6 | 0.3 | 3 | 3 - 4 |
| 14 | Beispiel 1 | Kryptofix²⁾ | | 4 | 4 |

| | | | | | |
|---|---|---|---|---|---|
| 1) Gew% bezogen auf Pulver | | | | | |
| 2) gelöst in Isopropanol; bei Zugabe Quallenbildung | | | | | |

## Patentansprüche

1. Vernetzbare, in Wasser redispergierbare Pulverzusammensetzung enthaltend
a) 30 bis 95 Gewichtsteile eines in Wasser unlöslichen, filmbildenden Polymerisats aus einem oder mehreren radikalisch polymerisierbaren, ethylenisch ungesättigten Monomeren,
b) 5 bis 70 Gewichtsteile eines wasserlöslichen Polymerisats,
wobei zumindest einer der Polymeranteile a) und b) ein oder mehrere Comonomereinheiten mit reaktiven Gruppen enthält, die miteinander oder mit Vernetzern eine chemische, nichtionische Bindung eingehen können, und sich die Gewichtsteile von a) und b) auf 100 Gewichtsteile aufaddieren, und
c) 0.01 bis 5 Gew%, bezogen auf das Gesamtgewicht von a) und b), mindestens eines Phasentransfer-Katalysators.

2. Vernetzbare, in Wasser redispergierbare Pulverzusammensetzung nach Anspruch 1, enthaltend als Polymer a) Polymerisate mit einer oder mehreren Monomereinheiten aus der Gruppe der Vinylester von unverzweigten oder verzweigten Alkylcarbonsäuren mit 1 bis 15 C-Atomen, der Methacrylsäureester und Acrylsäureester von unverzweigten oder verzweigten Alkoholen mit 1 bis 12 C-Atomen, der Fumarsäureund Maleinsäuremono- oder -diester von unverzweigten oder verzweigten Alkoholen mit 1 bis 12 C-Atomen, der Diene, der Olefine, der Vinylaromaten, und der Vinylhalogenide.

3. Vernetzbare, in Wasser redispergierbare Pulverzusammensetzung nach Anspruch 1 oder 2, wobei das Polymer a) ein oder mehrere vernetzbare Monomereinheiten aus der Gruppe der Alkoxysilan-, Epoxid-, Isocyanat-, Amido-, Hydroxy-, Carbonsäure-, Sulfonsäure-, Carbonyl-, Amino-, Hydrazid-Gruppen-haltigen Monomere enthält.

4. Vernetzbare, in Wasser redispergierbare Pulverzusammensetzung nach Anspruch 1 bis 3, wobei das Polymer b) ein gegebenenfalls mit Hydroxylgruppen, Mercaptogruppen, Carboxylgruppen, Amingruppen oder Carbonylgruppen funktionalisiertes wasserlösliches Schutzkolloid ist.

5. Vernetzbare, in Wasser redispergierbare Pulverzusammensetzung nach Anspruch 1 bis 4, enthaltend als Komponente c) einen Phasentransferkatalysator aus der Gruppe der quarternären Ammoniumsalze, der qarternären Phosphoniumsalze, der quarternären Pyridiniumsalze, der Kronenether, der Polyether, der Polyethylenglykol-dialkyl-Ether, der Polyethylenglykol-aryl-aralkyl-Ether, der Polyethylenglykol-alkyl-aryl-Ether, und zur Komplexbildung geeigneten tertiären Di- oder Oligoamine.

6. Vernetzbare, in Wasser redispergierbare Pulverzusammensetzung nach Anspruch 1 bis 5, enthaltend einen oder mehrere Vernetzer aus der Gruppe der Di-, Oligo- und Polyamine, der Di-, Oligo- und Polycarbonsäuren, der Verbindungen mit zwei oder mehr Alkoholgruppen, der Verbindungen mit zwei und mehr Silanol- oder Alkoxysilan-Gruppen, der Di-, Oligo- oder Polyisocyanate, der polyvalenten Metallionen, der Verbindungen mit 2 oder mehreren Epoxid-, Aldehyd-, Keto-, reaktiven CH-Gruppen.

7. Verwendung der vernetzbaren, in Wasser redispergierbaren Pulverzusammensetzungen nach Anspruch 1 bis 6 als Komponente für die Herstellung von Bauklebern, Putzen, Spachtelmassen, Fußbodenspachtelmassen, Fugenmörtel, Farben, als Alleinbindemittel für Beschichtungsmittel und Klebemittel oder als Bindemittel für Textilien und Papier.

## Claims

1. Crosslinkable powder composition which is redispersible in water and comprises
a) from 30 to 95 parts by weight of a waterinsoluble, film-forming polymer of one or more free-radically polymerizable, ethylenically unsaturated monomers,
b) from 5 to 70 parts by weight of a water-soluble polymer,
where at least one of the polymer components a) and b) comprises one or more comonomer units containing reactive groups which can form a chemical, nonionic bond with one another or with crosslinkers, and the parts by weight of a) and b) add up to 100 parts by weight, and
c) from 0.01 to 5% by weight, based on the total weight of a) and b), of at least one phase transfer catalyst.

2. Crosslinkable powder composition which is redispersible in water according to Claim 1, comprising as polymer a) polymers comprising one or more monomer units selected from the group consisting of vinyl esters of unbranched or branched alkylcarboxylic acids having from 1 to 15 carbon atoms, methacrylic and acrylic esters of unbranched or branched alcohols having from 1 to 12 carbon atoms, fumaric and maleic monoesters or diesters of unbranched or branched alcohols having from 1 to 12 carbon atoms, dienes, olefins, vinylaromatics and vinyl halides.

3. Crosslinkable powder composition which is redispersible in water according to Claim 1 or 2, wherein polymer a) comprises one or more crosslinkable monomer units selected from the group consisting of monomers containing alkoxysilane, epoxide, isocyanate, amido, hydroxy, carboxyl, sulphonic acid, carbonyl, amino or hydrazide groups.

4. Crosslinkable powder composition which is redispersible in water according to any of Claims 1 to 3, wherein polymer b) is a water-soluble protective colloid which may be functionalized with hydroxyl groups, mercapto groups, carboxyl groups, amine groups or carbonyl groups.

5. Crosslinkable powder composition which is redispersible in water according to any of Claims 1 to 4, comprising as component c) a phase transfer catalyst selected from the group consisting of quaternary ammonium salts, quaternary phosphonium salts, quaternary pyridinium salts, crown ethers, polyethers, polyethylene glycol dialkyl ethers, polyethylene glycol aryl aralkyl ethers, polyethylene glycol alkyl aryl ethers and tertiary diamines or oligoamines suitable for complex formation.

6. Crosslinkable powder composition which is redispersible in water according to any of Claims 1 to 5, comprising one or more crosslinkers selected from the group consisting of diamines, oligoamines and polyamines, dicarboxylic, oligocarboxylic and polycarboxylic acids, compounds containing two or more alcohol groups, compounds containing two or more silanol or alkoxysilane groups, diisocyanates, oligoisocyanates or polyisocyanates, polyvalent metal ions, compounds containing 2 or more epoxide, aldehyde, keto or reactive CH groups.

7. Use of the crosslinkable powder composition which is redispersible in water according to any of Claims 1 to 6 as a component for producing building adhesives, plasters and renders, knifing fillers, screeds, jointing mortars, paints, as sole binder for coating compositions and adhesives or as binder for textiles and paper.

## Revendications

1. Composition pulvérulente réticulable redispersable dans l'eau comprenant
a) de 30 à 95 parties en poids d'un polymère filmogène insoluble dans l'eau à base d'un ou de plusieurs monomères éthyléniquement insaturés polymérisables par voie radicalaire,
b) de 5 à 70 parties en poids d'un polymère hydrosoluble,
au moins l'un des composants polymères a) et b) renfermant un ou plusieurs motifs comonomères ayant des groupes réactifs, qui peuvent former une liaison chimique non ionique les uns avec les autres ou avec des agents de réticulation, et la somme des parties en poids de a) et b) étant de 100 parties, et
c) de 0,01 à 5% en poids, par rapport au poids total de a) et b), d'au moins un catalyseur à transfert de phase.

2. Composition pulvérulente réticulable redispersable dans l'eau selon la revendication 1, comprenant, en tant que polymère a), des polymères ayant un ou plusieurs motifs monomères parmi le groupe constitué d'esters vinyliques d'acides alkylcarboxyliques non ramifiés ou ramifiés, ayant de 1 à 15 atomes de carbone, d'esters méthacryliques et d'esters acryliques d'alcools non ramifiés ou ramifiés ayant de 1 à 12 atomes de carbone, de monoesters ou diesters fumariques et maléiques d'alcools non ramifiés ou ramifiés ayant de 1 à 12 atomes de carbone, de diènes, d'oléfines, de vinyles aromatiques et d'halogénures de vinyle.

3. Composition pulvérulente réticulable redispersable dans l'eau selon la revendication 1 ou 2, dans laquelle le polymère a) renferme un ou plusieurs motifs monomères réticulables parmi le groupe constitué de monomères renfermant des groupes alcoxysilane, époxy, isocyanate, amido, hydroxy, acide carboxylique, acide sulfonique, carbonyle, amino, ou hydrazide.

4. Composition pulvérulente réticulable redispersable dans l'eau selon les revendications 1 à 3, dans laquelle le polymère b) est un colloïde protecteur hydrosoluble éventuellement fonctionnalisé avec des groupes hydroxy, des groupes mercapto, des groupes carboxy, des groupes amine, ou des groupes carbonyle.

5. Composition pulvérulente réticulable redispersable dans l'eau selon les revendications 1 à 4, comprenant, en tant que composant c), un catalyseur à transfert de phase parmi le groupe constitué de sels d'ammonium quaternaires, de sels de phosphonium quaternaires, de sels de pyridinium quaternaires, d'éther-couronnes, de polyéthers, d'éthers dialkyliques de polyéthylèneglycol, d'éthers arylaralkyliques de polyéthylèneglycol, d'éthers alkylaryliques de polyéthylèneglycol, et de diamines et d'oligoamines tertiaires appropriées pour la complexation.

6. Composition pulvérulente réticulable redispersable dans l'eau selon les revendications 1 à 5, comprenant un ou plusieurs agents de réticulation parmi le groupe constitué de diamines, d'oligoamines et de polyamines, d'acides dicarboxyliques, oligocarboxyliques et polycarboxyliques, de composés ayant deux groupes alcool ou plus, de composés ayant deux groupes silanol ou alcoxysilane et plus, de diisocyanates, d'oligo-isocyanates ou de polyisocyanates, d'ions métalliques polyvalents, de composés ayant 2 groupes époxy, aldéhyde, céto ou CH réactifs ou plus.

7. Utilisation des compositions pulvérulentes réticulables redispersables dans l'eau selon les revendications 1 à 6, en tant que composant pour la production d'adhésifs de construction, d'enduits crépis, de mastics bouche-pores, de mastics pour planchers, de mortiers à joints, de peintures, en tant que liants uniques pour des compositions de revêtements et des adhésifs, ou en tant que liants pour textiles et papier.
